# EUROPÄISCHE PATENTSCHRIFT

(11) **EP 2 638 364 B1**
(45) Veröffentlichungstag und Bekanntmachung des Hinweises auf die Patenterteilung: **12.08.2015**
(21) Anmeldenummer: 11778608.7
(22) Anmeldetag: 03.11.2011
(51) Int. Cl.: G01D 5/14

(54) **POSITIONSSENSOR IN EINER FAHRWERKSBUCHSE**
POSITION SENSOR IN A CHASSIS BUSH
CAPTEUR DE POSITION DANS UNE DOUILLE DE CHÂSSIS

(30) Priorität: 10.11.2010 DE 102010043691
(43) Veröffentlichungstag der Anmeldung: 18.09.2013
(73) Patentinhaber: Continental Teves AG & Co. oHG, 60488 Frankfurt (DE)
(72) Erfinder: ANTONI, Henrik, 63579 Freigericht (DE); RINK, Klaus, 63517 Rodenbach (DE); ALBRECHT, Veit, 63150 Heusenstamm (DE); BURGDORF, Christian, 63075 Offenbach (DE)
(86) Internationale Anmeldenummer: PCT/EP2011/069337
(87) Internationale Veröffentlichungsnummer: WO 2012/062649

(56) Entgegenhaltungen:
- WO-A1-00/28282
- US-B1- 6 253 460

## Beschreibung

Die Erfindung betrifft einen Positionssensor gemäß Oberbegriff von Anspruch 1 sowie die Verwendung des Positionssensors als Höhenstandssensor in Kraftfahrzeugen.

Zur Messung des Höhenstands von Kraftfahrzeugen, beispielsweise für eine Leuchtweitenregulierung, eine Fahrwerksregelung oder eine Beladungsschätzung sind Winkelsensoren bekannt, die mit einem Koppelstangengetriebe die Bewegung des Fahrzeugchassis relativ zum Fahrwerk erfassen. Es hat sich aber herausgestellt, dass solche Sensoren relativ anfällig gegenüber Umwelteinflüssen sind, beispielsweise durch aufgewirbelte Steine oder Eis beschädigt werden können.

Druckschrift DE 103 43 588A1 schlägt einen Höhenstandssensor vor, der einen in eine Fahrwerksbuchse integrierten Drehwinkelgeber aufweist, welcher durch magnetisierte Partikel in einem Elastomerkörper in der Fahrwerksbuchse ausgebildet ist, wobei das Magnetfeld dieser magnetisierten Partikel durch ein Sensorelement erfasst wird und daraus der Drehwinkel ermittelt wird. Die Messpräzision dieses Höhenstandssensors kann allerdings durch translatorische Bewegungen der Buchse negativ beeinflusst werden.

Die Druckschrift US 6 253 460 B1 offenbart eine Vorrichtung mit mehreren kontaktlosen Sensoren zum Messen einer Positionsänderung eines Maschinenelements. Die Vorrichtung zielt darauf ab, den Verschleiß der Sensoren durch die kontaktlose Sensierung zu minimieren.

Die Druckschrift WO 00/28282 offenbart einen magnetoresistiven Sensor, der mittels der Kombination eines magnetoresistiven Elements an einem ersten Maschinenteil und eines magnetischen Bauteils an einem zweiten Maschinenteil die relative Bewegung zwischen den Maschinenteilen erfasst.

Die Erfindung hat sich die Aufgabe gestellt einen Positionssensor mit einem Positionsgeber in oder an einer Buchse eines Lagers vorzuschlagen, wobei der Positionssensor relativ robust und präzise bezüglich der Drehwinkelmessung ist und dabei insbesondere wenig empfindlich gegenüber translatorischen Positionierungen der Buchse.

Diese Aufgabe wird erfindungsgemäß gelöst durch den Positionssensor gemäß Anspruch 1.

Der Positionssensor umfasst bevorzugt genau zwei von einander beabstandete Magnetfeldsensorelemente.

Die zwei voneinander beabstandeten Magnetfeldsensorelemente sind vorzugsweise symmetrisch bezüglich einer Geraden senkrecht zur Mittelachse der Welle und diese Mittelachse schneidend angeordnet. Dabei sind die beiden Magnetfeldsensorelemente insbesondere mindestens ein Viertel, besonders bevorzugt mindestens ein Drittel, des Radius der Buchse voneinander beabstandet angeordnet.

Die Drehwinkelstellung des Lagers und die translatorische Positionierung der Buchse beziehen sich bevorzugt auf relative Positionierungen bzw. relative Auslenkungen zwischen Buchse und Welle des Lagers.

Der Positionssensor umfasst vorzugsweise eine elektronische Auswerteschaltung, welche so ausgelegt ist, dass sie aus den Ausgangssignalen der Magnetfeldsensorelemente ein Drehwinkelsignal und ein Translations-Positionssignal ermittelt bzw. berechnet und bereitstellt.

Der Positionsgeber ist bevorzugt als magnetisierte Partikel in einem Elastomerkörper ausgebildet, wobei der Elastomerkörper in der Buchse eingelassen ist, und wobei die magnetisierten Partikel ein magnetisches Muster aufweisen und dieses durch ihre Magnetisierung und Anordnung abbilden, wobei diese magnetisierten Partikel insbesondere in der Buchse umlaufend, alternierend magnetisierte Zonen ausbilden.

Alternativ vorzugsweise umfasst der Positionsgeber zwei oder mehr, insbesondere genau zwei, Stabmagnete, welche in einen Elastomerkörper eingelassen sind, der in die Buchse eingelassen ist, wobei die Stabmagnete besonders bevorzugt im Wesentlichen axial bezogen auf die Welle im Elastomerkörper ausgerichtet und magnetisiert sind.

Es ist zweckmäßig, dass die Buchse wenigstens zwei magnetische Marken aufweist, welche insbesondere zahnförmig ausbildet sind und im Wesentlichen gegenüber auf dem äußeren Rand der Buchse angeordnet sind, insbesondere bezogen auf die Mittelachse der Welle, wobei jeder Marke wenigstens ein Magnetfeldsensorelement, insbesondere genau ein Magnetfeldsensorelement, zugeordnet ist.

Es ist bevorzugt, dass der Positionssensor eine Flussleiteinrichtung aus magnetisch leitfähigem Material umfasst, die ein Teil des magnetischen Kreises bildet, welcher zusätzlich die wenigstens zwei Magnetfeldsensorelemente sowie den wenigstens einen magnetischen Positionsgeber umfasst. Die Flussleiteinrichtung umfasst dabei insbesondere ein Gebersegment und ein Sensiersegment, wobei das Gebersegment in die Buchse eingearbeitet ist und als Positionsgeber dient und das Sensiersegment direkt oder indirekt mit den beiden Magnetfeldsensorelementen verbunden ist, die über jeweils einen Luftspalt mit dem Gebersegment magnetisch gekoppelt sind. Das Gebersegment ist dabei besonders bevorzugt in einen Elastomerkörper zumindest teilweise eingebettet, welcher in die Buchse eingelassen ist, wobei das Gebersegment und das Sensiersegment der Flussleiteinrichtung ganz besonders bevorzugt aus weichmagnetischem Material ausgebildet sind und der magnetische Kreis zusätzlich wenigstens einen Permanentmagneten zur Erzeugung des Magnetfelds aufweist.

Unter dem Elastomerkörper wird bevorzugt generell ein elastisches Material verstanden, das in der Lagerbuchse angeordnet ist, ohne chemische Einschränkung.

Der Elastomerkörper mit Positionsgeber ist vorzugsweise an der Stirnseite der Buchse des Lagers angeordnet, insbesondere in einer umlaufenden Nut in der Stirnseite der Buchse.

Die wenigstens zwei Magnetfeldsensorelemente sind bevorzugt als magnetoresistive Sensorelemente und/oder Hallelemente ausgebildet.

Die elektronische Auswerteschaltung ist bevorzugt so ausgelegt, dass sie gleichgerichtete Winkeländerungen bezüglich der Erfassung durch beide Magnetfeldsensorelemente als translatorische Positionsänderungen identifiziert und diese hinsichtlich der Ermittlung der Drehwinkelstellung herausrechnet.

Es ist bevorzugt, dass aus dem Ablenkwinkel des Magnetfeldes zwischen Positionsgeber und dem jeweiligen Magnetfeldsensorelement, auf die Winkelposition geschlossen wird.

Der Positionssensor umfasst vorzugsweise eine Koppelstange, in welche die Buchse mit dem Positionsgeber angeordnet ist, sowie einen Kugelkopf, in oder an welchem die Magnetfeldsensorelemente angeordnet sind.

Aus den Verformungen des Elastomerkörpers, welche über das Magnetfeld durch zumindest die beiden Magnetfeldsensorelemente erfasst werden, wird in der entsprechend ausgelegten Auswerteschaltung bevorzugt auf die Kräfte im Lager geschlossen bzw. diese Kräfte berechnet.

Die Erfindung bezieht sich außerdem auf die Verwendung des Positionssensors als Höhenstandssensor in Kraftfahrzeugen. Insbesondere wird der Positionssensors in Systemen zur Leuchtweitenregulierung oder Fahrwerksregelung oder Niveauregulierung oder Beladungsabschätzung verwendet.

Weitere bevorzugte Ausführungsformen ergeben sich aus den Unteransprüchen und den nachfolgenden Beschreibungen von Ausführungsbeispielen an Hand von Figuren.

Es zeigen in schematischer Darstellung
- Fig. 1: ein Ausführungsbeispiel eines Positionssensors, bei welchem in der Buchse ein Elastomerkörper mit magnetischen Partikeln eingelassen ist, welche umlaufend, alternierend magnetisierte Zonen ausbilden,
- Fig. 2: ein beispielhafter Positionssensor, dessen Buchse auf ihrem Rand zwei magnetische Marken aufweist,
- Fig. 3: ein beispielhafter Positionssensor, dessen Positionsgeber zwei Stabmagneten, eingelassen in einen Elastomerkörper in der Buchse, aufweist, und
- Fig. 4: ein Ausführungsbeispiel eines Positionssensors mit einer Flussleiteinrichtung, die ein Gebersegment eingelassen in einen Elastomerkörper in der Buchse sowie ein Sensiersegment auf Seiten der Magnetfeldsensorelemente umfasst.

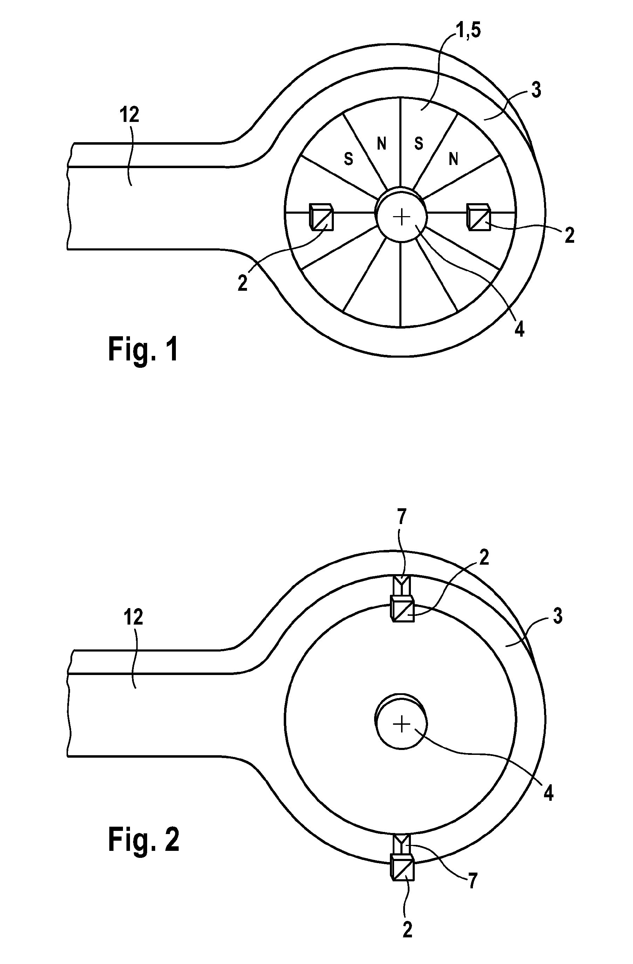

Fig. 1 zeigt einen beispielhaften Positionssensor, umfassend ein Lager mit Buchse 3 und Welle 4, das an einer Koppelstange 12 angeordnet ist, welcher ein nicht dargestellter Kugelkopf zugeordnet ist. In Buchse 3 ist magnetischer Positionsgeber 1 eingelassen, welcher aus magnetischen Partikeln, in einen Elastomerkörper 5 eingebettet, besteht. Dabei sind die magnetischen Partikel so angeordnet und magnetisiert, dass sie bezüglich der Buchse 3 umlaufende, alternierend magnetisierte Zonen N, S bilden. Das Magnetfeld, das durch den Positionsgeber 1 erzeugt wird, wird von zwei Magnetfeldsensorelementen 2 erfasst, welche bezogen auf die Mittelachse der Welle 4 gegenüber angeordnet sind und sowohl die Drehwinkelstellung der Buchse 3 als auch die translatorische Positionierung der Buchse 3 erfassen.

In Fig. 2 ist ein Ausführungsbeispiel des Positionssensors dargestellt, bei dem auf dem äußersten Rand der Buchse 3, gegenüberliegend bezüglich der Mittelachse der Welle 4, zwei magnetische Marken 7 als Positionsgeber angeordnet sind, denen jeweils berührungslos ein Magnetfeldsensorelement 2 zugeordnet ist. Die magnetischen Marken 7 sind zahnförmig ausgebildet und können permanentmagnetisch sein oder weichmagnetisch, wobei dann ein nicht dargestellter zusätzlicher Permanentmagnet bei wenigstens einem der Magnetfeldsensorelemente 2 oder den Marken 7 angeordnet ist. Buchse 3 ist an einer Koppelstange 12 angeordnet.

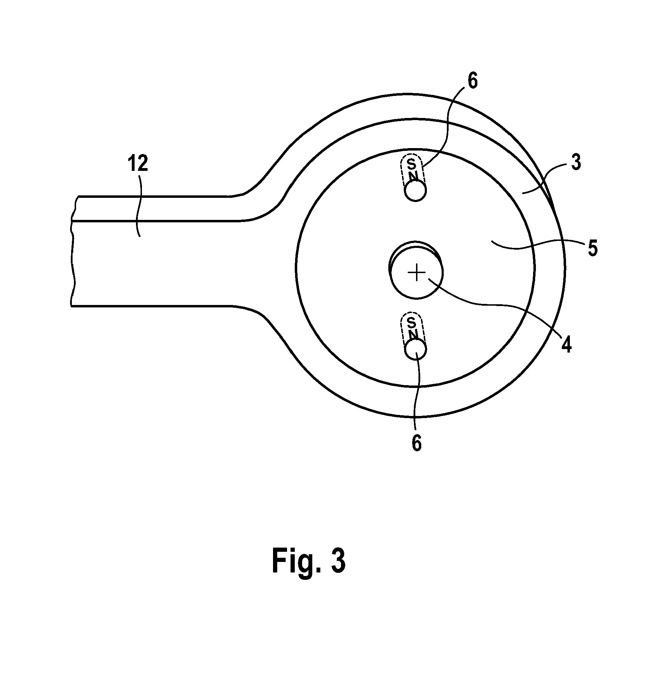

Der anhand der Fig. 3 veranschaulichte, beispielhafte Positionssensor umfasst zwei Stabmagnete 6, als Positionsgeber, die in Elastomerkörper 5 in Buchse 3 eingelassen sind. Buchse 3 und Welle 4 bilden ein Lager, dessen Drehwinkelstellung erfasst wird sowie die translatorische Positionierung der Buchse, durch zwei nicht dargestellte Magnetfeldsensorelemente.

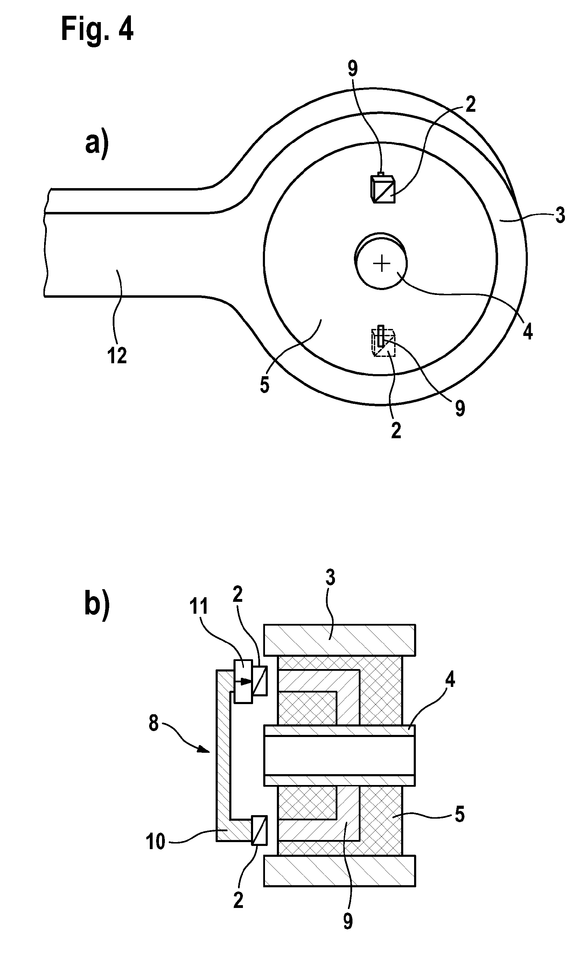

Fig. 4 zeigt ein Ausführungsbeispiel des Positionssensors, der eine Flussleiteinrichtung 8 aus magnetisch leitfähigem Material aufweist. Die Flussleiteinrichtung 8 umfasst ein Gebersegment 9, welches als Positionsgeber dient, und in Elastomerkörper 5 in Buchse 3 eingelassen ist. Dabei weist Gebersegment 9, wie in Fig. 4 b) veranschaulicht, zwei Winkelsegmente auf, welche zu den Magnetfeldsensorelementen 2 zugewandt in den Elastomerkörper 5 eintauchen und in der Mitte durch Welle 4 getrennt sind. Die beiden Magnetfeldsensorelemente 2 sind über Sensiersegment 10 der Flussleiteinrichtung gemeinsam mit einem Permanentmagnet 11 magnetisch gekoppelt. So ergibt sich ein magnetischer Kreis, ausgehend von dem einen Magnetfeldsensorelement 2, das über einen Luftspalt mit dem einen Winkelsegment des Gebersegments 9 magnetisch gekoppelt ist. Die beiden Winkelsegmente des Gebersegments 9 sind über einen Luftspalt bzw. die Welle 4 miteinander gekoppelt. Das andere Winkelsegment des Gebersegments 9 ist dann über den anderen Luftspalt mit dem anderen Magnetfeldsensorelement 2 gekoppelt, wobei dieses andere Magnetfeldsensorelement 2 über das Sensiersegment 10 und den Permanentmagneten 11 mit dem ersten Magnetfeldsensorelement magnetisch gekoppelt ist. In Fig. 4 a) ist veranschaulicht, wie Buchse 3 an einer Koppelstange 12 angeordnet ist, und mit Welle 4 ein Lager bildet, wobei in Buchse 3 der Elastomerkörper 5 eingelassen ist, welcher das Gebersegment 9 als Positionsgeber aufweist, das mit jeweils einem Ende einem Magnetfeldsensorelement 2 zugeordnet ist.

## Patentansprüche

1. Positionssensor in oder an einem Lager, welcher mindestens einen magnetischen Positionsgeber (1, 6, 7, 8, 9) und mindestens ein Magnetfeldsensorelement (2) aufweist, wobei der Positionsgeber (1, 6, 7, 8, 9) in oder an einer Buchse (3) des Lagers angeordnet ist, die eine Welle (4) aufnimmt, und das wenigstens eine Magnetfeldsensorelement (2) das von dem Positionsgeber erzeugte und/oder modulierte Magnetfeld berührungslos erfasst, **dadurch gekennzeichnet, dass**
der Positionssensor mindestens zwei voneinander beabstandete Magnetfeldsensorelemente (2) aufweist, die so in Bezug auf den wenigstens einen magnetischen Positionsgeber (1, 6, 7, 8, 9) angeordnet sind, dass sie durch das Erfassen des Magnetfelds zumindest eine Information über eine Drehwinkelstellung des Lagers sowie über eine translatorische Positionierung der Buchse (3) erfassen.

2. Positionssensor nach Anspruch 1, **dadurch gekennzeichnet, dass** dieser eine elektronische Auswerteschaltung umfasst, welche so ausgelegt ist, dass sie aus den Ausgangssignalen der Magnetfeldsensorelemente (2) ein Drehwinkelsignal und ein Translations-Positionssignal ermittelt und bereitstellt.

3. Positionssensor nach Anspruch 1 oder 2, **dadurch gekennzeichnet, dass** der Positionsgeber als magnetisierte Partikel in einem Elastomerkörper (5) ausgebildet ist, der in die Buchse (3) eingelassen ist, wobei die magnetisierten Partikel ein magnetisches Muster (N, S) aufweisen und durch ihre Magnetisierung und Anordnung abbilden, und dabei insbesondere in der Buchse (3) umlaufend, alternierend magnetisierte Zonen (N, S) ausbilden.

4. Positionssensor nach Anspruch 1 oder 2, **dadurch gekennzeichnet, dass** der Positionsgeber zwei oder mehr Stabmagnete (6) umfasst, welche in einen Elastomerkörper (5) eingelassen sind, der in die Buchse (3) eingelassen ist, wobei die Stabmagnete (6) insbesondere im Wesentlichen axial bezogen auf die Welle (4) im Elastomerkörper (5) ausgerichtet und magnetisiert sind.

5. Positionssensor nach Anspruch 1 oder 2, **dadurch gekennzeichnet, dass** die Buchse (3) wenigstens zwei magnetische Marken (7) aufweist, welche insbesondere zahnförmig ausbildet sind und im Wesentlichen gegenüber auf dem äußeren Rand der Buchse (3) angeordnet sind, wobei jeder Marke wenigstens ein Magnetfeldsensorelement (2) zugeordnet ist.

6. Positionssensor nach mindestens einem der Ansprüche 1 bis 5, **dadurch gekennzeichnet, dass** der Positionssensor eine Flussleiteinrichtung (8) aus magnetisch leitfähigem Material umfasst, die ein Teil des magnetischen Kreises bildet, welcher zusätzlich die wenigstens zwei Magnetfeldsensorelemente (2) sowie den wenigstens einen magnetischen Positionsgeber (1, 6, 7, 8, 9) umfasst.

7. Positionssensor nach Anspruch 6, **dadurch gekennzeichnet, dass** die Flussleiteinrichtung (8) ein Gebersegment (9) und ein Sensiersegment (10) umfasst, wobei das Gebersegment (9) in die Buchse (3) eingearbeitet ist und als Positionsgeber dient und das Sensiersegment (10) direkt oder indirekt mit den beiden Magnetfeldsensorelementen (2) verbunden ist, die über jeweils einen Luftspalt mit dem Gebersegment (9) magnetisch gekoppelt sind.

8. Positionssensor nach Anspruch 7, **dadurch gekennzeichnet, dass** das Gebersegment (9) in einen Elastomerkörper (5) zumindest teilweise eingebettet ist, welcher in die Buchse (3) eingelassen ist, wobei das Gebersegment (9) und das Sensiersegment (10) der Flussleiteinrichtung (8) insbesondere aus weichmagnetischem Material ausgebildet sind und der magnetische Kreis zusätzlich wenigstens einen Permanentmagneten (11) zur Erzeugung des Magnetfelds aufweist.

9. Positionssensor nach mindestens einem der Ansprüche 2 bis 8, **dadurch gekennzeichnet, dass** die elektronische Auswerteschaltung so ausgelegt ist, dass sie gleichgerichtete Winkeländerungen bezüglich der Erfassung durch beide Magnetfeldsensorelemente (2) als translatorische Positionsänderungen identifiziert und diese hinsichtlich der Ermittlung der Drehwinkelstellung herausrechnet.

10. Verwendung des Positionssensors, gemäß mindestens einem der Ansprüche 1 bis 9, als Höhenstandssensor in Kraftfahrzeugen.

## Claims

1. Position sensor that is provided in or on a bearing and comprises at least one magnetic position encoder (1, 6, 7, 8, 9) and at least one magnetic field sensor element (2), wherein the position encoder (1, 6, 7, 8, 9) is arranged in or on a bush (3) of the bearing and said bush receives a shaft (4), and the at least one magnetic field sensor element (2) detects in a contactless manner the magnetic field that is generated and/or modulated by the position encoder, **characterized in that**
the position encoder comprises at least two magnetic field sensor elements (2) that are spaced apart from one another and are arranged with regard to the at least one magnetic position encoder (1, 6, 7, 8, 9) in such a manner that by means of detecting the magnetic field said magnetic field sensor elements capture at least information regarding a rotational angle position of the bearing and also regarding a translatory positioning of the bush (3).

2. Position sensor according to Claim 1, **characterized in that** said position sensor comprises an electronic evaluating circuit that is configured in such a manner that from the output signals of the magnetic field sensor elements (2) it determines and makes available a rotational angle signal and a translation-position signal.

3. Position sensor according to Claim 1 or 2, **characterized in that** the position encoder is embodied as magnetized particles in an elastomer body (5) that is embedded in the bush (3), wherein the magnetized particles comprise and form as a result of their magnetization and arrangement a magnetized pattern (N, S) and in so doing create magnetized Zones (N, S) that alternate in particular in a circumferential manner in the bush (3).

4. Position sensor according to Claim 1 or 2, **characterized in that** the position encoder comprises two or more rod magnets (6) that are embedded in an elastomer body (5) that is embedded in the bush (3), wherein the rod magnets (6) are aligned and magnetized in the elastomer body (5) in particular essentially in an axial manner with regard to the shaft (4).

5. Position sensor according to Claim 1 or 2, **characterized in that** the bush (3) comprises at least two magnetized marks (7) that are formed in particular in a tooth-shaped manner and are arranged essentially opposite on the outer edge of the bush (3), wherein each mark is allocated at least one magnetic field sensor element (2).

6. Position sensor according to at least one of Claims 1 to 5, **characterized in that** the position sensor comprises a flux guiding device (8) that is embodied from a magnetically conductive material that forms a part of the magnetic circuit that comprises in addition the at least two magnetic field sensor elements (2) and the at least one magnetic position encoder (1, 6, 7, 8, 9).

7. Position sensor according to Claim 6, **characterized in that** the flux guiding device (8) comprises an encoder segment (9) and a sensor segment (10), wherein the encoder segment (9) is embedded in the bush (3) and is used as a position encoder and the sensor segment (10) is connected directly or indirectly to the two magnetic field sensor elements (2) that are magnetically coupled to the encoder segment (9) by way of a respective air gap.

8. Position sensor according to Claim 7, **characterized in that** the encoder segment (9) is embedded at least in part in an elastomer body (5) that is embedded in the bush (3), wherein the encoder segment (9) and the sensor segment (10) of the flux guiding device (8) are embodied in particular from a soft magnetic material and the magnetic circuit comprises in addition at least one permanent magnet (11) so as to generate the magnetic field.

9. Position sensor according to at least one of Claims 2 to 8, **characterized in that** the electronic evaluating circuit is configured in such a manner that it identifies identically-aligned angle changes with respect to the detection process by means of the two magnetic field sensors elements (2) as translatory position changes and calculates these with respect to determining the rotational angle position.

10. Use of the position sensor in accordance with at least one of Claims 1 to 9 as a height sensor in motor vehicles.

## Revendications

1. Détecteur de position dans ou sur un palier, lequel possède au moins un codeur de position magnétique (1, 6, 7, 8, 9) et au moins un élément détecteur de champ magnétique (2), le codeur de position (1, 6, 7, 8, 9) étant disposé dans ou sur une douille (3) du palier, laquelle accueille un arbre (4), et l'au moins un élément détecteur de champ magnétique (2) détectant sans contact le champ magnétique généré et/ou modulé par le codeur de position, **caractérisé en ce que**
le détecteur de position possède au moins deux éléments détecteurs de champ magnétique (2) espacés l'un de l'autre, lesquels sont disposés par rapport à l'au moins un codeur de position magnétique (1, 6, 7, 8, 9) de telle sorte que par la détection du champ magnétique, ils acquièrent au moins une information à propos d'une position angulaire de rotation du palier ainsi qu'à propos d'un positionnement translatoire de la douille (3).

2. Détecteur de position selon la revendication 1, **caractérisé en ce que** celui-ci comprend un circuit d'interprétation électronique qui est conçu de telle sorte qu'il détermine et délivre un signal d'angle de rotation et un signal de position de translation à partir des signaux de sortie des éléments détecteurs de champ magnétique (2).

3. Détecteur de position selon la revendication 1 ou 2, **caractérisé en ce que** le codeur de position est réalisé sous la forme de particules magnétisées dans un corps en élastomère (5), lequel est noyé dans la douille (3), les particules magnétisées présentant un modèle magnétique (N, S) et le représentant par leur magnétisation et leur arrangement, et formant ici notamment dans la douille (3) des zones (N, S) magnétisées en alternance sur leur pourtour.

4. Détecteur de position selon la revendication 1 ou 2, **caractérisé en ce que** le codeur de position comprend deux barreaux magnétiques (6) ou plus, lesquels sont noyés dans un corps en élastomère (5), lequel est noyé dans la douille (3), les barreaux magnétiques (6) étant notamment orientés et magnétisés essentiellement dans le sens axial en référence à l'arbre (4) dans le corps en élastomère (5).

5. Détecteur de position selon la revendication 1 ou 2, **caractérisé en ce que** la douille (3) possède au moins deux repères magnétiques (7) qui sont notamment réalisés en forme de dents et qui sont sensiblement disposés en opposition sur le bord extérieur de la douille (3), au moins un élément détecteur de champ magnétique (2) étant associé à chaque repère.

6. Détecteur de position selon au moins l'une des revendications 1 à 5, **caractérisé en ce que** le détecteur de position comprend un dispositif de guidage de flux (8) en matériau magnétiquement conducteur, lequel forme une partie du circuit magnétique qui comprend en plus les au moins deux éléments détecteurs de champ magnétique (2) ainsi que l'au moins un codeur de position magnétique (1, 6, 7, 8, 9).

7. Détecteur de position selon la revendication 6, **caractérisé en ce que** le dispositif de guidage de flux (8) comprend un segment codeur (9) et un segment détecteur (10), le segment codeur (9) étant incorporé dans la douille (3) et servant de codeur de position et le segment détecteur (10) étant relié directement ou indirectement aux deux éléments détecteurs de champ magnétique (2), lesquels sont couplés magnétiquement au segment codeur (9) respectivement par le biais d'un entrefer.

8. Détecteur de position selon la revendication 7, **caractérisé en ce que** le segment codeur (9) est au moins partiellement enrobé dans un corps en élastomère (5), lequel est noyé dans la douille (3), le segment codeur (9) et le segment détecteur (10) du dispositif de guidage de flux (8) étant notamment réalisés en un matériau magnétique tendre et le circuit magnétique possédant en plus au moins un aimant permanent (11) servant à générer le champ magnétique.

9. Détecteur de position selon au moins l'une des revendications 2 à 8, **caractérisé en ce que** le circuit d'interprétation électronique est conçu de telle sorte qu'il identifie les changements d'angle redressés en rapport avec la détection par les deux éléments détecteurs de champ magnétique (2) comme des changements de position translatoire et calcule ceux-ci dans la perspective de déterminer la position angulaire de rotation.

10. Utilisation du détecteur de position selon au moins l'une des revendications 1 à 9 en tant que détecteur de position de hauteur dans des véhicules automobiles.
